# EUROPÄISCHE PATENTSCHRIFT

(11) **EP 4 306 715 B1**
(45) Veröffentlichungstag und Bekanntmachung des Hinweises auf die Patenterteilung: **01.07.2026**
(21) Anmeldenummer: 23183343.5
(22) Anmeldetag: 04.07.2023
(51) Int. Cl.: E01B 27/16, F16B 43/00

(54) **DISTANZSCHEIBE**
SPACER DISC
RONDELLE D'ÉCARTEMENT

(30) Priorität: 14.07.2022 AT 1452022
(43) Veröffentlichungstag der Anmeldung: 17.01.2024
(73) Patentinhaber: Bahnbau Wels GmbH, 4600 Wels (AT)
(72) Erfinder: Bernecker, Hermann, 4643 Pettenbach (AT)
(74) Vertreter: Ellmeyer, Wolfgang

(56) Entgegenhaltungen:
- EP-B1- 3 759 280
- DE-U1- 202005 012 878
- FR-A- 695 750

## Beschreibung

Diese Erfindung betrifft eine Distanzscheibe für einen Pickelarm komplett.

Eine Stopfmaschine wird im Eisenbahnwesen dazu verwendet, um den Schotter, auf dem die Schwellen liegen, zu verdichten. Dabei werden so genannte "Stopfpickel", welcher an "Pickelarmen komplett" befestigt sind, in den Schotter eingeführt und horizontal bewegt, was zu einer Verdichtung des Schotters führt, wobei gleichzeitig die Schienen etwas angehoben werden. Diese "Pickelarme komplett" sind beweglich ausgeführt und umgreifen die Schwellen teilweise, sodass mit den Stopfpickeln der Schotter unterhalb der Schwelle verdichtet wird.

Die "Pickelarme komplett" sind beweglich an einem Pickelarmbolzen angeordnet, der wiederum mit dem Stopfkasten verbunden ist. Zwischen der Befestigung des Axialbolzens, welcher den Pickelarm mit den Schwenklagern verbindet, sind Distanzscheiben angeordnet, die einem Verschleiß unterliegen. Ist eine Toleranzgrenze beim Verschleiß erreicht, muss der gesamte "Pickelarm komplett" vom Pickelarmbolzen entfernt werden, die Distanzscheiben ausgebaut werden, neue Distanzschreiben eingesetzt werden und die "Pickelarme komplett" erneut am Pickelarmbolzen angebracht werden. Zur Zentrierung sind Distanzscheiben mit einem Vorsprung und manchmal mit einem Schmierkanal auf einer Seite versehen.

EP3759280B1 zeigt in Fig. 7 zwei Schwenklagerungen eines Pickelarmes. Einmal ist der Pickelarm über eine Büchse und Abstandshaltern mit dem Auge des Pickelkastens mit Hilfe eines Bolzens verbunden und verschraubt. Damit das Schmieröl nicht austreten kann, sind links und rechts der Lagerung Radialdichtungen eingebaut, die mit Abstandsdeckeln fixiert sind. Das andere Mal ist der Pickelarm über schmierfreie Gleitbüchsen und Abstandsscheiben mit Hilfe eines Bolzens mit dem Pickelkasten verschraubt.

DE202005012878U1 offenbart ein Rinnenelementverbindungsmittel für eine lösbare Rinnenelementverbindung von Rinnenelementen einer Förderrinne im untertägigen Berg- und Tunnelbau. Das Rinnenelementverbindungsmittel weist zwei Keilkörper auf, die je eine Aussparung zum zumindest teilweise Umgreifen des Schaftes aufweisen und quer zum Schaft anordbar sind, und es sind zwei Spannschrauben vorgesehen, mit denen die Stellung der Keilkörper zueinander zum Spannen der Rinnenelementverbindung verstellbar ist. Jeder Keilkörper weist zu beiden Seiten der Aussparung parallel zueinander eine Bohrung für den Durchgriff der Spannschrauben auf. Jede Spannschraube durchgreift dabei im Montagezustand vorzugsweise jeweils eine Bohrung des einen und des anderen Keilkörpers. Der Spannbolzen ist mit einem Schraubgewinde versehen, und eine Mutter mit einem Einschraubgewinde für den Schaft des Spannbolzens dient als Konterelement.

Ziel der vorliegenden Erfindung ist die Bereitstellung einer Distanzscheibe für einen Pickelarm komplett, die ohne Abnehmen des "Pickelarms komplett" ausgetauscht werden kann.

Erfindungsgemäß wird dies dadurch erreicht, indem eine Distanzscheibe für einen Pickelarm komplett bereitgestellt wird, die eine Vorderseite und eine Rückseite aufweist, zweiteilig ausgeführt ist, wobei die Schnittebene normal zur Rotationsebene verläuft, und zwei Löcher aufweist, die in der Rotationsebene angeordnet sind, und die zwei Teile durch Schrauben, die durch die Löcher steckbar sind, verbindbar sind.

Die Vorderseite der Distanzscheibe weist einen Schmierkanal auf und/oder die Rückseite der Distanzscheibe einen Schmierkanal auf. Durch den Schmierkanal kann die bewegliche Distanzscheibe geschmiert werden, wodurch sich die Lebensdauer erhöht. Durch den Schmierkanal wird das Schmiermittel gleichmäßig verteilt. Als Schmiermittel kann beispielsweise ein Festschmierstoff auf Mineralölbasis mit einem Eindicker, z.B. Lithiumhydroxystearat, und weiteren Additiven verwendet werden.

Diese zweiteilige Distanzscheibe wird auf einen Axialbolzen des "Pickelarms komplett" geschoben, und die beiden Teile werden verschraubt. Nach Verschleiß der Distanzscheibe können durch Lockerung der Mutter am Axialbolzen die Einzelteile des "Pickelarms komplett" leicht auseinander geschoben werden, sodass die Schrauben, die die zwei Teile der Distanzscheibe zusammenhalten, gelöst werden können und so die zwei Teile entfernt werden können. Es erfolgt ein Austausch gegen eine neue Distanzscheibe, wobei die beiden Teile der Distanzscheibe auf den Axialbolzen aufgesteckt werden und durch Schrauben, die durch die Löcher der Distanzscheibe gesteckt werden, zusammengeschraubt werden. Der Austausch erfolgt somit schnell und kosteneffizient; ein arbeitsaufwändiges komplettes Auseinanderschrauben des "Pickelarms komplett" entfällt.

Der Außendurchmesser ist durch den Außendurchmesser der Planflächen der Einzelteile des "Pickelarms komplett" gegeben. Der Innendurchmesser der Distanzscheibe ist dem Außendurchmesser des Axialbolzens für die Zentrierung angepasst. Die Distanzscheibe kann im Wesentlichen kreisrund oder elliptisch ausgeführt sein.

In einer anderen Ausführungsform der Erfindung kann zumindest ein Schmierkanalverteiler im Schmierkanal der Vorderseite und/oder zumindest ein Schmierkanalverteiler im Schmierkanal der Rückseite angeordnet sein. Der Schmierkanalverteiler verteilt das Schmiermittel gleichmäßig im Schmierkanal.

In einer anderen Ausführungsform der Erfindung können zwei bis sechs Schmierkanalverteiler im Schmierkanal der Vorderseite und/oder zwei bis sechs Schmierkanalverteiler im Schmierkanal der Rückseite angeordnet sein. Dadurch wird das Schmiermittel gleichmäßiger verteilt.

In einer anderen Ausführungsform der Erfindung kann zumindest eine Durchgangsbohrung im Schmierkanal der Vorderseite und Rückseite angeordnet sein, die die Schmierkanäle der Vorderseite und Rückseite verbindet. Dadurch kann Schmiermittel von einer Vorderseite der Distanzscheibe auf die Rückseite verteilt werden und umgekehrt.

In einer Ausführungsform der Erfindung kann zumindest eines der Löcher oder zumindest ein Abschnitt zumindest eines der beiden Löcher eine Gewindebohrung aufweisen. Wenn eine Schraube durch eines der Löcher gesteckt wird, um die beiden Teile zu verbinden, kann nun die Schraube direkt ohne die Verwendung einer Mutter verschraubt werden und somit die beiden Teile der Distanzscheibe verbinden.

In einer Ausführungsform der Erfindung kann die Distanzscheibe symmetrisch aufgebaut sein. Dies vereinfacht den Einbau und die Produktion, da nur eine Form hergestellt werden muss und somit eine Verwechslung beim Einbau vermieden wird.

In einer anderen Ausführungsform der Erfindung kann die Distanzscheibe aus Metall, vorzugsweise Messing, insbesondere GC-CuSn12Ni, ausgeführt sein. Metall erweist sich als ausgesprochen verschleißarm, wobei sich GC-CuSn12Ni auch durch niedrige Kosten auszeichnet.

In einem anderen Aspekt betrifft die vorliegende Erfindung einen Pickelarm komplett, der Folgendes umfasst:
zumindest zwei Distanzscheiben;
einen Axialbolzen;
zumindest eine Mutter des Axialbolzens;
zumindest ein äußeres Schwenklager;
zumindest einen Pickelarm;
zumindest ein inneres Schwenklager;
zumindest eine Gleitbüchse;
zumindest einen Zwischenraum;
wobei die Distanzscheibe eine Distanzscheibe wie oben beschrieben ist.

"Pickelarm komplett" bezeichnet die komplette Vorrichtung, die zum Stopfen des Schotters bei Gleisen verwendet wird. Bei einfachen Stopfmaschinen sind die Stopfpickel direkt in die Pickelarme montiert, und diese sind wiederum mit dem Stopfkasten verbunden. Bei komplexeren Maschinen, in denen auch die vorliegende Erfindung Anwendung findet, stellt sich die Situation wie folgt dar: Hier sind die Stopfpickel nicht direkt am Pickelarm selbst montiert, sondern in beweglicher Form in sogenannten Schwenklagern. Die daraus entstehende Einheit, bestehend aus dem eigentlichen Pickelarm, den Schwenklagern, Axialbolzen, Distanzscheiben etc., wird seitens des Herstellers und auch generell in der Branche als "Pickelarm komplett" bezeichnet. Hingegen bezeichnet "Pickelarm" nur den Teil des "Pickelarms komplett", der durch einen Pickelarmbolzen mit dem Pickelkasten verbunden ist.

Durch die oben beschriebene Ausführung der Distanzscheibe wird ein Pickelarm komplett bereitgestellt, der einen einfachen Ein- und Ausbau der Distanzscheibe ermöglicht. Die Mutter am Axialbolzen muss etwas gelockert werden, sodass die zweiteilige Distanzscheibe entnommen werden kann und durch eine neue ersetzt werden kann.

Die Distanzscheibe weist zwei Oberflächen auf, ist zweiteilig ausgeführt, wobei die Schnittebene normal zur Rotationsebene verläuft, und weist zwei Löcher auf, die in der Rotationsebene angeordnet sind, wobei die zwei Teile durch Schrauben, die durch die Löcher steckbar sind, verbindbar sind.

Der Außendurchmesser ist durch den Außendurchmesser der Planflächen der Einzelteile des "Pickelarms komplett" gegeben. Der Innendurchmesser der Distanzscheibe ist dem Außendurchmesser des Axialbolzens für die Zentrierung angepasst.

Gegebenenfalls kann zumindest eines der Löcher oder zumindest ein Abschnitt zumindest eines der beiden Löcher eine Gewindebohrung aufweisen.

Gegebenenfalls kann die Distanzscheibe symmetrisch aufgebaut sein. Gegebenenfalls kann die Distanzscheibe aus Metall, vorzugsweise Messing, insbesondere GC-CuSn12Ni, ausgeführt sein.

Gegebenenfalls kann zumindest ein Schmierkanalverteiler im Schmierkanal der Vorderseite und/oder zumindest ein Schmierkanalverteiler im Schmierkanal der Rückseite angeordnet sein.

Gegebenenfalls können zwei bis sechs Schmierkanalverteiler im Schmierkanal der Vorderseite und/oder zwei bis sechs Schmierkanalverteiler im Schmierkanal der Rückseite angeordnet sein.

Gegebenenfalls kann zumindest eine Durchgangsbohrung im Schmierkanal der Vorderseite und Rückseite angeordnet sein, die die Schmierkanäle der Vorderseite und Rückseite verbindet.

In den Beispielen und den Figuren werden folgende Bezugszeichen verwendet:
- 1: Distanzscheibe
- 1a: Vorderseite der Distanzscheibe
- 1b: Rückseite der Distanzscheibe
- 2: Mutter des Axialbolzens
- 3a, 3b: Bohrloch zur Aufnahme einer Schraube
- 4: Axialbolzen
- 5: Vorsprung auf der Distanzscheibe
- 6a, 6b: Schmierkanal
- 7: Bohrdurchmesser, angepasst an den Axialbolzen
- 8a, 8b: Schmierkanalverteiler
- 9: Durchgangsbohrung zur beidseitigen Schmierung
- 10: äußeres Schwenklager
- 11: Pickelarm
- 12: inneres Schwenklager
- 13: Gleitbüchse
- 14: Zwischenraum

### Zeichnungen

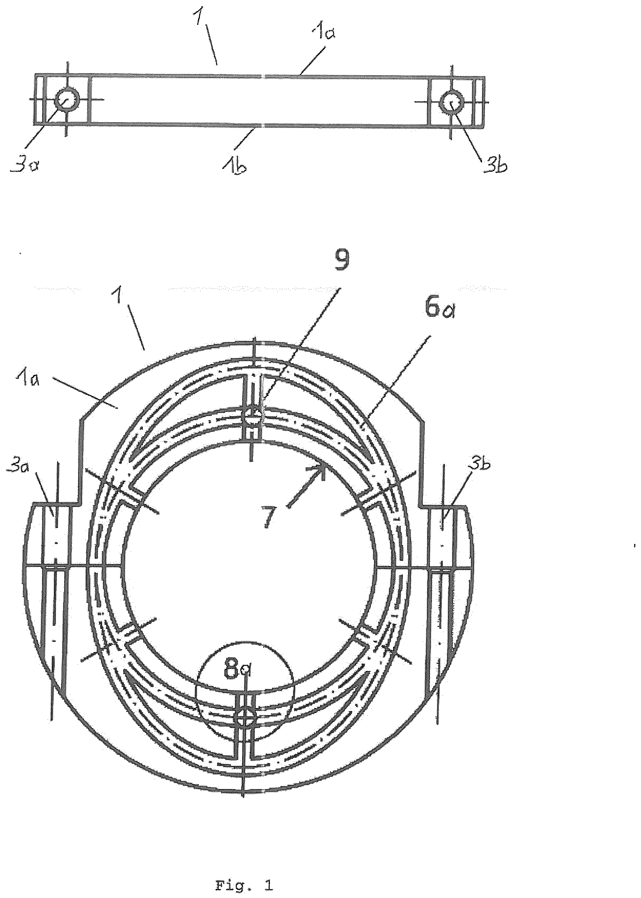

**Fig.** 1 zeigt eine Schnittdarstellung (oben) und eine Draufsicht (unten) einer erfindungsgemäßen zweiteiligen Distanzscheibe.

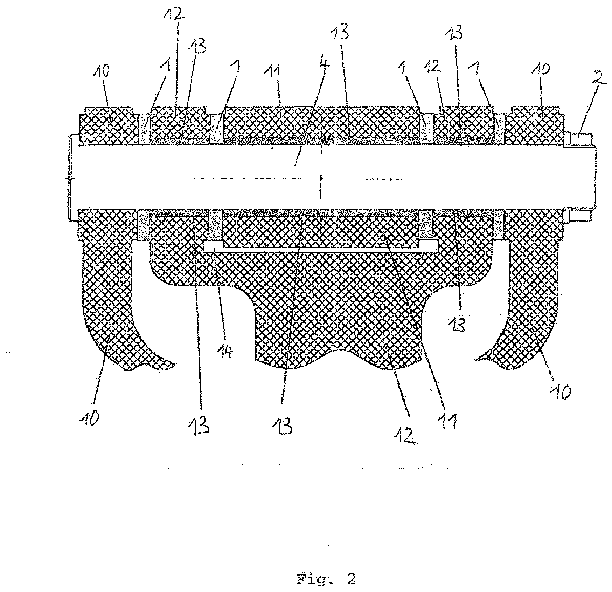

**Fig.** 2 zeigt eine Schnittdarstellung eines erfindungsgemäßen Pickelarms komplett mit zweiteilig ausgeführter Distanzscheibe.

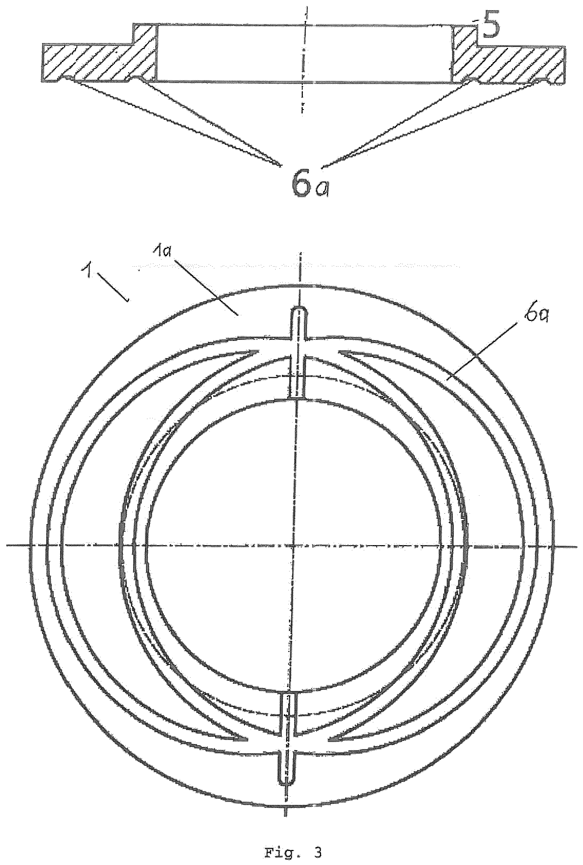

**Fig.** 3 zeigt eine Schnittdarstellung (oben) und eine Draufsicht (unten) einer Distanzscheibe des Stands der Technik mit einem Vorsprung zur Zentrierung und einseitig ausgestalteten Schmierkanälen.

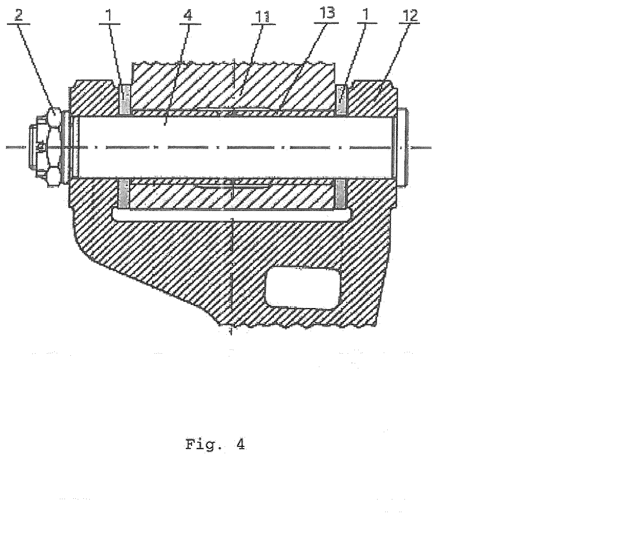

**Fig.** 4 zeigt eine Schnittdarstellung eines Pickelarms komplett mit einem Schwenklager.

### BEISPIEL

### Pickelarm komplett mit zwei Schwenklagern und mit zweiteiliger Distanzscheibe

Der Pickelarm komplett umfasst Folgendes:
vier Distanzscheiben 1;
einen Axialbolzen 4;
eine Mutter des Axialbolzens 2;
ein äußeres Schwenklager 10;
einen Pickelarm 11;
ein inneres Schwenklager 12;
drei Gleitbüchsen 13;
einen Zwischenraum 14;
wobei die Distanzscheibe 1 eine Vorderseite 1a und eine Rückseite 1b aufweist, zweiteilig ausgeführt ist, wobei die Schnittebene normal zur Rotationsebene verläuft, und zwei Löcher 3a, 3b aufweist, die in der Rotationsebene angeordnet sind, wobei die zwei Teile durch Schrauben, die durch die Löcher 3a, 3b steckbar sind, verbunden sind.

Der Außendurchmesser ist durch den Außendurchmesser der Planflächen der Einzelteile des "Pickelarms komplett" gegeben. Der Innendurchmesser der Distanzscheibe ist dem Außendurchmesser des Axialbolzens für die Zentrierung angepasst.

Die Distanzscheibe 1 ist symmetrisch aufgebaut und aus GC-CuSn12Ni ausgeführt. Die Vorderseite 1a und die Rückseite 1b weisen jeweils einen Schmierkanal 6a bzw. 6b auf. Sechs Schmierkanalverteiler 8a sind auf der Vorderseite 1a und sechs Schmierkanalverteiler 8b auf der Rückseite 1b angeordnet. Zwei Durchgangsbohrungen 9 sind im Schmierkanal 6a und 6b angeordnet, die die Schmierkanäle 6a, 6b der Vorderseite 1a bzw. der Rückseite 1b verbinden, um das Schmiermittel besser zwischen Vorderseite 1a und Rückseite 1b zu verteilen.

Die Distanzscheibe 1 kann einfach ausgetauscht werden. Die Mutter 2 am Axialbolzen 4 muss etwas gelockert werden, sodass die zweiteilige Distanzscheibe 1 entnommen werden kann und durch eine neue ersetzt werden kann.

## Patentansprüche

1. Distanzscheibe (1) für einen Pickelarm komplett gemäß Oberbegriff des Anspruchs 8, wobei die Distanzscheibe (1) eine Vorderseite (1a) und eine Rückseite (1b) aufweist, zweiteilig ausgeführt ist, wobei die Schnittebene normal zur Rotationsebene verläuft,
die Distanzscheibe (1) zwei Löcher (3a, 3b) aufweist, die in der Rotationsebene angeordnet sind, und die zwei Teile durch Schrauben, die durch die Löcher (3a, 3b) steckbar sind, verbindbar sind,
**dadurch gekennzeichnet, dass**
die Vorderseite (1a) der Distanzscheibe (1) einen Schmierkanal (6a) aufweist und/oder die Rückseite (1b) der Distanzscheibe (1) einen Schmierkanal (6b) aufweist.

2. Distanzscheibe nach Anspruch 1,
**dadurch gekennzeichnet, dass**
zumindest ein Schmierkanalverteiler (8a) im Schmierkanal (6a) und/oder zumindest ein Schmierkanalverteiler (8b) im Schmierkanal (6b) angeordnet ist.

3. Distanzscheibe nach einem der Ansprüche 1 bis 2,
**dadurch gekennzeichnet, dass**
zwei bis sechs Schmierkanalverteiler (8a) im Schmierkanal (6a) und/oder zwei bis sechs Schmierkanalverteiler (8b) im Schmierkanal (6b) angeordnet sind.

4. Distanzscheibe nach einem der Ansprüche 1 bis 3,
**dadurch gekennzeichnet, dass**
zumindest eine Durchgangsbohrung (9) im Schmierkanal (6a, 6b) angeordnet ist, die die Schmierkanäle (6a, 6b) verbindet.

5. Distanzscheibe nach einem der Ansprüche 1 bis 4,
**dadurch gekennzeichnet, dass**
zumindest eines der Löcher (3a, 3b) oder zumindest ein Abschnitt zumindest eines der beiden Löcher (3a, 3b) eine Gewindebohrung aufweist.

6. Distanzscheibe nach einem der Ansprüche 1 bis 5,
**dadurch gekennzeichnet, dass**
die Distanzscheibe (1) symmetrisch aufgebaut ist.

7. Distanzscheibe nach einem der Ansprüche 1 bis 6,
**dadurch gekennzeichnet, dass**
die Distanzscheibe (1) aus Metall, vorzugsweise Messing, insbesondere GC-CuSn12Ni, ausgeführt ist.

8. Pickelarm komplett, der Folgendes umfasst:
zumindest zwei Distanzscheiben (1);
einen Axialbolzen (4);
zumindest eine Mutter des Axialbolzens (2);
zumindest ein äußeres Schwenklager (10);
zumindest einen Pickelarm (11);
zumindest ein inneres Schwenklager (12);
zumindest eine Gleitbüchse (13);
zumindest einen Zwischenraum (14);
**dadurch gekennzeichnet, dass**
die Distanzscheiben (1) Distanzscheiben (1) nach einem der Ansprüche 1 bis 7 sind.

## Claims

1. A distance washer (1) for a tamping arm assembly according to the preamble of claim 8, the distance washer (1) having a front side (1a) and a back side (1b) and being a two-part design, wherein the section plane extends perpendicular to the rotation plane,
the distance washer (1) having two holes (3a, 3b) arranged in the rotation plane, and the two parts being connectable by bolts insertable through the holes (3a, 3b),
**characterized in that**
the front side (1a) of the distance washer (1) has a lubrication channel (6a) and/or the back side (1b) of the distance washer (1) has a lubrication channel (6b).

2. The distance washer according to claim 1,
**characterized in that**
at least one lubrication channel distributor (8a) is arranged in the lubrication channel (6a) and/or at least one lubrication channel distributor (8b) is arranged in the lubrication channel (6b).

3. The distance washer according to any one of claims 1 to 2,
**characterized in that**
two to six lubrication channel distributors (8a) are arranged in the lubrication channel (6a) and/or two to six lubrication channel distributors (8b) are arranged in the lubrication channel (6b).

4. The distance washer according to any one of claims 1 to 3,
**characterized in that**
at least one through-bore (9) is arranged in the lubrication channel (6a, 6b) connecting the lubrication channels (6a, 6b).

5. The distance washer according to any one of claims 1 to 4,
**characterized in that**
at least one of the holes (3a, 3b) or at least a portion of at least one of the holes (3a, 3b) has a threaded bore.

6. The distance washer according to any one of claims 1 to 5,
**characterized in that**
the distance washer (1) has a symmetrical structure.

7. The distance washer according to any one of claims 1 to 6,
**characterized in that**
the distance washer (1) is made of metal, preferably brass, in particular GC-CuSn12Ni.

8. A tamping arm assembly comprising:
at least two distance washers (1);
an axial bolt (4);
at least one nut for the axial bolt (2);
at least one outer pivot bearing (10);
at least one tamping arm (11);
at least one inner pivot bearing (12);
at least one slide bush (13):
at least one interspace (14);
**characterized in that**
the distance washers (1) are distance washers (1) according to any one of claims 1 to 7.

## Revendications

1. Disque d'écartement (1) pour un bourroir complet selon le préambule de la revendication 8, le disque d'écartement (1) présentant une face avant (1a) et une face arrière (1b) et étant réalisé en deux pièces, le plan de coupe étant perpendiculaire au plan de rotation,
ledit disque d'écartement (1) présentant deux trous (3a, 3b) disposés dans ledit plan de rotation, et lesdites deux pièces pouvant être reliées par des vis qui peuvent être insérées à travers lesdits trous (3a, 3b),
**caractérisé en ce que**
ladite face avant (1a) dudit disque d'écartement (1) présente un canal de lubrification (6a) et/ou **en ce que** ladite face arrière (1b) dudit disque d'écartement (1) présente un canal de lubrification (6b).

2. Disque d'écartement selon la revendication 1,
**caractérisé en ce que**
au moins un distributeur de canal de lubrification (8a) est disposé dans ledit canal de lubrification (6a) et/ou **en ce qu'**au moins un distributeur de canal de lubrification (8b) est disposé dans ledit canal de lubrification (6b).

3. Disque d'écartement selon l'une quelconque parmi les revendications 1 à 2, **caractérisé en ce que**
deux à six distributeurs de canal de lubrification (8a) sont disposés dans ledit canal de lubrification (6a) et/ou **en ce que** deux à six distributeurs de canal de lubrification (8b) sont disposés dans ledit canal de lubrification (6b).

4. Disque d'écartement selon l'une quelconque parmi les revendications 1 à 3, **caractérisé en ce que**
au moins un alésage (9) est disposé dans ledit canal de lubrification (6a, 6b), reliant lesdits canaux de lubrification (6a, 6b).

5. Disque d'écartement selon l'une quelconque parmi les revendications 1 à 4, **caractérisé en ce que**
au moins un desdits trous (3a, 3b) ou au moins une section d'au moins un parmi lesdits deux trous (3a, 3b) présente un alésage fileté.

6. Disque d'écartement selon l'une quelconque parmi les revendications 1 à 5, **caractérisé en ce que**
ledit disque d'écartement (1) est construit de manière symétrique.

7. Disque d'écartement selon l'une quelconque parmi les revendications 1 à 6, **caractérisé en ce que**
ledit disque d'écartement (1) est réalisé en métal, de préférence en laiton, notamment en GC-CuSn12Ni.

8. Bourroir complet, présentant les éléments suivants :
au moins deux disques d'écartement (1) ;
un boulon axial (4) ;
au moins un écrou dudit boulon axial (2) ;
au moins un palier pivotant extérieur (10) ;
au moins un bourroir (11) ;
au moins un palier pivotant intérieur (12) ;
au moins une douille coulissante (13) ;
au moins un espacement (14) ;
**caractérisé en ce que**
lesdits disques d'écartement (1) sont des disques d'écartement (1) selon l'une quelconque parmi les revendications 1 à 7.
